# EUROPÄISCHE PATENTSCHRIFT

(11) **EP 3 253 515 B1**
(45) Veröffentlichungstag und Bekanntmachung des Hinweises auf die Patenterteilung: **27.02.2019**
(21) Anmeldenummer: 16711993.2
(22) Anmeldetag: 10.03.2016
(51) Int. Cl.: B22F 3/105, B23K 26/342, B23K 15/00, B33Y 30/00, B29C 64/153, B29C 64/20, B23K 26/12

(54) **ANLAGE FÜR EIN ADDITIVES HERSTELLUNGSVERFAHREN MIT HEIZEINRICHTUNG FÜR DEN PULVERRAUM**
SYSTEM FOR AN ADDITIVE PRODUCTION METHOD HAVING HEATING DEVICE FOR THE POWDER CHAMBER
INSTALLATION POUR UN PROCÉDÉ DE FABRICATION ADDITIVE COMPRENANT UN SYSTÈME DE CHAUFFAGE POUR LA CHAMBRE À POUDRE

(30) Priorität: 24.03.2015 DE 102015205314
(43) Veröffentlichungstag der Anmeldung: 13.12.2017
(73) Patentinhaber: Siemens Aktiengesellschaft, 80333 München (DE)
(72) Erfinder: KRÜGER, Ursus, 14089 Berlin (DE); REZNIK, Daniel, 13503 Berlin (DE)
(86) Internationale Anmeldenummer: PCT/EP2016/055153
(87) Internationale Veröffentlichungsnummer: WO 2016/150721

(56) Entgegenhaltungen:
- DE-A1-102012 012 344
- US-A1- 2009 314 391
- US-A1- 2013 309 420

## Beschreibung

Die Erfindung betrifft eine Anlage für ein additives Herstellungsverfahren, welche eine Prozesskammer aufweist, in der eine Vorrichtung zur Aufnahme eines Pulverbettes vorgesehen ist. Diese Vorrichtung muss einen nach oben offenen Pulverraum zur Verfügung stellen, so dass mittels eines Energiestrahls, beispielsweise eines Laserstrahls oder eines Elektronenstrahls, das Pulver im Pulverbett lagenweise unter Ausbildung eines herzustellenden Bauteils aufgeschmolzen werden kann. Der Pulverraum ist demnach nach Art einer Wanne ausgebildet und besteht aus einer Bodenstruktur und einer Seitenbegrenzung. Außerdem ist eine Heizeinrichtung für den Pulverraum vorgesehen, mit der sowohl das Pulverbett als auch das in dem Pulverbett in Entstehung befindliche, dass heißt herzustellende Bauteil temperiert werden kann.

Eine Anlage der eingangs angegebenen Art ist in der EP 1 355 760 B1 beschrieben. Hierbei handelt es sich um eine Anlage zum selektiven Laserschmelzen, wobei das Pulverbett auf einer beheizbaren Bauplatte geschichtet wird. Die Bauplatte dient gleichzeitig als Unterlage für das herzustellende Bauteil, welches über die Bauplatte ebenfalls erwärmt wird. Dabei sind Prozesstemperaturen von bis zu 500°C vorgesehen.

Im Vergleich zu dem in Herstellung befindlichen Bauteil ist das Pulverbett ein schlechter Wärmeleiter. Die Beheizung des Pulvers über die Bauplatte wird daher bei fortschreitender Herstellung des Bauteils zunehmend erschwert, da die Pulverpartikel der jeweils neuen Lagen des Pulverbettes immer weiter von der Bauplatte entfernt sind. Damit fällt auch die Temperierung des Bauteils immer schwerer, wobei die Wärme aus dem Bauteil sowohl an das nicht mehr genügend erwärmte Pulverbett als auch nach oben in die Prozesskammer abgegeben werden kann.

Gemäß der DE 10 2012 206 122 A1 wird vorgeschlagen, dass eine Temperierung des Bauteils auch mittels einer Induktionsspule erreicht werden kann, so dass das Bauteil induktiv erwärmt wird. Die zum Einsatz kommenden Induktionsspulen werden dabei relativ zum Pulverbett und dem in Entstehung befindlichen Bauteil bewegt, wodurch sich die Region der Wärmeentstehung im Bauteil beeinflussen lässt.

Die Einbringung von Wärme durch Induktion ist von der Geometrie des Bauteils abhängig. Eine gleichmäßige Erwärmung des Bauteils lässt sich somit nur bei vergleichsweise einfachen Bauteilgeometrien und kompakter Bauweise des Bauteils erreichen. Bei komplexeren Geometrien, wie z.B. Querschnittssprüngen oder Hinterschneidungen, wird die Ausbildung der Wirbelströme im in Entstehung befindlichen Bauteil gestört, weswegen es zu einer heterogenen Erwärmung des Bauteils kommt.

Es besteht nun der Wunsch, die Temperierung des Bauteils möglichst über sein gesamtes Volumen steuern zu können und insbesondere ein einheitliches zeitliches Temperaturprofil im gesamten Bauteil zu erzeugen. Insbesondere soll dabei die rapide Abkühlung des Schmelzbades und des gerade erzeugten Bauteilbereiches gezielt verlangsamt werden. Hierdurch soll einem Ausbilden von Eigenspannungen entgegengewirkt werden. Außerdem ist die Abkühlgeschwindigkeit im Bauteil maßgeblich, wenn bestimmte Gefügezustände erreicht werden sollen. Beispielsweise ist es bei Bauteilen aus Nickelbasis-Superlegierungen für die Einstellung der Hochtemperaturfestigkeit wichtig, dass ein hoher Anteil von γ'-Ausscheidungen im Gefüge vorhanden ist. Diese bilden sich jedoch nur aus, wenn das Bauteil unterhalb der γ'-Solidustemperatur von ca. 1150°C langsamer als etwa 1°C/s abgekühlt wird. Bei der Herstellung von Bauteilen aus einer Nickelbasis-Superlegierung ist es daher wünschenswert, eine Abkühlung des Bauteils in der Nähe des Schmelzbades auf diese Abkühlungstemperatur zu begrenzen (zumindest unterhalb der γ'-Solidustemperatur).

Gemäß der DE 10 2012 012 344 A1 ist beschrieben, dass ein pulverbettbasiertes additives Fertigungsverfahren in einer Anlage mit einer thermischen Isolation des Pulverbetts durchgeführt werden kann. Eine Isolationsstruktur wird zu diesem Zweck manschettenförmig um das Pulverbett herum angeordnet. Die Bodenplatte des Pulverbetts ist axial verschiebbar, weswegen eine thermische Isolation nach unten durch eine keramische Schicht in der Bauplattform erreicht wird. Zwischen der Bauplattform und der manschettenartigen thermischen Isolation befindet sich eine Außenwand des Pulverbetts, die nach unten aus der thermischen Isolation herausragt.

Die Aufgabe der Erfindung liegt darin, eine Anlage der eingangs angegebenen Art derart weiterzubilden, dass ein in der Anlage hergestelltes Bauteil vergleichsweise gleichmäßig und/oder langsam abkühlen kann.

Diese Aufgabe wird mit einer Vorrichtung gemäß Anspruch 1 gelöst, wobei die Vorrichtung zur Aufnahme des Pulverbettes eine den Pulverraum umgebende thermische Isolationsstruktur aufweist, die den Pulverraum an der Seitenbegrenzung und unter dem Pulverraum umgibt. Als thermische Isolationsstruktur im Sinne der Erfindung ist ein Körper zu verstehen, der im Vergleich zur Seitenbegrenzung eine geringere Wärmeleitfähigkeit aufweist, so dass die im herzustellenden Bauteil und Pulverbett gespeicherte Wärme über die Seitenbegrenzung verlangsamt wird. Hierdurch verringert sich auch die Abkühlgeschwindigkeit in dem Bauteil und es kann eine wirksame Temperierung des Pulverbettes und des in Herstellung befindlichen Bauteils mittels der Heizeinrichtung erfolgen. Insbesondere ist es möglich, das Pulverbett auch in Lagen, die weit von der Unterlage für die Herstellung des Bauteils (Bauplatte, die durch die Bodenstruktur zur Verfügung gestellt werden kann oder auf der Bodenstruktur befestigt wird) weit entfernt ist, eine gleichmäßige Temperierung zu bewerkstelligen. Hierdurch ist es insbesondere möglich, die Abkühlgeschwindigkeit in dem in Herstellung befindlichen Bauteil zu steuern, wodurch sich ausbildende Spannungen im Bauteil verringert werden. Weiterhin kann vorteilhaft die Ausbildung von bestimmten Gefügezuständen erreicht werden, die sich aufgrund von Diffusionsvorgängen im Gefüge nur einstellen, wenn die Abkühlgeschwindigkeit nicht zu hoch ist (beispielsweise die Ausbildung von γ'-Ausscheidungen in Bauteilen aus einer Nickelbasis-Superlegierung, wie diese beispielsweise für die Herstellung von Turbinenschaufeln zum Einsatz kommt).

Gemäß der Erfindung ist außerdem vorgesehen, dass die Isolationsstruktur wannenförmig ausgebildet ist, wobei die Vorrichtung zur Aufnahme des Pulverbettes in die wannenförmige Vertiefung der Isolationsstruktur eingesetzt ist. Dies hat den Vorteil, dass die Isolationsstruktur eine Isolierung nicht nur an der Seitenbegrenzung sondern auch unterhalb der Bodenstruktur bewirkt. Die Isolationsstruktur ist unterhalb der Bodenstruktur angeordnet, derart, dass die Bodenstruktur unabhängig von der Isolationsstruktur bewegt werden kann. Die Bodenstruktur ist nämlich bevorzugt axial in vertikaler Richtung beweglich ausgeführt, damit diese bei der Herstellung der Pulverlagen stufenweise abgesenkt werden kann, um das Niveau der Oberfläche des Pulverbettes konstant zu halten. Für einen Aktor zur Bewegung der Bodenstruktur ist in der Isolationsstruktur eine geeignete Ausnehmung oder Öffnung vorgesehen.

Gemäß einer anderen Ausgestaltung der Erfindung ist vorgesehen, dass die Isolationsstruktur und die Vorrichtung zur Aufnahme des Pulverbettes eine Temperaturbeständigkeit von mindestens 800 °C aufweisen. Hierdurch wird sichergestellt, dass vorteilhaft auch höhere Temperaturen für die Temperierung des Pulverbettes und des herzustellenden Bauteils möglich sind. Beispielsweise kann eine Temperierung eines Pulvers aus einer Nickelbasis-Superlegierung auf 1000 °C erfolgen, so dass der Temperaturunterschied zu dem hergestellten Bauteil bei Erreichen der γ'-Solidustemperatur nur noch 150 °C ausmacht. Dadurch wird eine Abkühlgeschwindigkeit von 1 °C/s gewährleistet.

Weiterhin kann vorteilhaft vorgesehen werden, dass die Isolationsstruktur eine Wärmeleitfähigkeit von höchstens 0,5 W/mK aufweist. Diese Wärmeleitfähigkeit führt vorteilhaft zu einer effektiven thermischen Isolation des Pulverbettes nach außen. Die Isolationsstruktur kann aus einem porösen mineralischen Material bestehen. Insbesondere kann als Material geblähtes Perlit zum Einsatz kommen. Dieses wird durch Glühen von Rohperlit bei Temperaturen von 800 - 1000 °C gewonnen und weist gleichzeitig eine hohe Temperaturbeständigkeit und eine geringe Dichte auf. Es lassen sich Wärmeleitfähigkeiten von 0,04 bis 0,07 W/mK mit geblähtem Perlit erreichen, so dass vorteilhaft ein hohes thermisches Isolationsvermögen der Isolationsstruktur sichergestellt ist.

Gemäß einer anderen Ausgestaltung der Erfindung ist vorgesehen, dass die Seitenbegrenzung und/oder die Bodenstruktur eine Wärmeleitfähigkeit von mindestens 20 W/mK aufweisen. Dies ist vorteilhaft eine Voraussetzung dafür, dass die Wärme von der Heizeinrichtung schnell an die äußeren Partikel des Pulverbettes abgegeben werden kann. Gleichzeitig bewirkt die thermische Isolationsstruktur, dass die Wärme der Heizeinrichtung nur in geringem Maße in die Umgebung der Vorrichtung zur Aufnahme des Pulverbettes abgegeben wird. Dies begrenzt vorteilhaft den Energieaufwand für die Temperierung des Pulverbettes und verbessert gleichzeitig die Homogenität der im Pulverbett sowie im herzustellenden Bauteil herrschenden Temperaturen.

Die Seitenbegrenzung und/oder die Bodenstruktur können aus einem Metall wie z.B. Kupfer, Molybdän oder Wolfram und/oder aus einer Keramik, insbesondere Siliziumcarbid, Bornitrid oder Aluminiumnitrid bestehen. Die aufgeführten Materialbeispiele weisen eine genügende Temperaturbeständigkeit für eine Temperierung auch für höhere Temperaturen auf. Die Metalle sind im Übrigen sehr gute Wärmeleiter. Die Keramiken vermindern vorteilhaft das Haftungsvermögen von Partikeln an der Seitenbegrenzung sowie der Bodenplatte. Um die Vorteile einer hohen Wärmeleitfähigkeit mit den Vorteilen eines geringen Haftungsvermögens der Partikel zu kombinieren, kann vorteilhaft auch vorgesehen werden, dass die Seitenbegrenzung und/oder die Bodenstruktur aus einem Metall mit einer an das Pulverbett grenzenden keramischen Beschichtung hergestellt werden.

Eine weitere Ausgestaltung der Erfindung sieht vor, dass die Seitenbegrenzung und/oder die Bodenstruktur eine Wandstärke von mindestens 10 mm aufweisen. Dies hat den Vorteil, dass die Heizeinrichtung, die z.B. aus einer elektrischen Widerstandsheizung bestehen kann, in die Bodenstruktur und/oder die Seitenbegrenzung eingebettet werden kann. Gleichzeitig gewährleistet die Wandstärke der Seitenbegrenzung und/oder Bodenstruktur eine genügende Wärmekapazität, damit die in der Heizeinrichtung erzeugte Wärme temporär gespeichert und homogen an das angrenzende Pulverbett oder das auf der Bodenplatte aufliegende Werkstück abgegeben werden kann.

Wenn die Bodenstruktur, wie bereits erwähnt, vertikal verschiebbar ist, ist es von besonderem Vorteil, dass die Bodenstruktur mit einer Bürstendichtung an der Seitenbegrenzung abgedichtet ist. Mit anderen Worten befinden sich in dem Spalt zwischen der Bodenstruktur und der Seitenbegrenzung die Borsten der Bürstendichtung, die bevorzugt in der Bodenstruktur radial nach außen stehend verankert sind. Die Bürstendichtung vermag vorteilhaft Toleranzen auszugleichen, die beispielsweise durch an den Seitenwänden anhaftende Partikel hervorgerufen werden könnten. Außerdem verhindert die Bürstendichtung, dass das Pulver durch den Spalt zwischen Bodenstruktur und Seitenbegrenzung rieselt. Wenn die Bürstendichtung aus einem thermisch gut leitfähigen Material, wie z.B. Metall, gefertigt ist, wird außerdem vorteilhaft ein guter Wärmeübergang zwischen der Seitenbegrenzung und der Bodenstruktur gewährleistet. Hierdurch kann vorteilhaft das Temperaturniveau, welches in der Seitenbegrenzung und der Bodenstruktur herrscht, vereinheitlicht werden. Abhängig vom Anwendungsfall ist es auch möglich, eine Heizeinrichtung nur in der Bodenstruktur oder nur in der Seitenbegrenzung vorzusehen, wobei die Erwärmung der jeweils anderen Struktur über die Bürstendichtung gewährleistet wird.

Vorteilhaft ist es auch, wenn die Isolationsstruktur mit der Vorrichtung zur Aufnahme des Pulverbettes ein Modul bildet, welches in der Prozesskammer in einer Aufnahmevorrichtung eingesetzt ist. Dies ermöglicht die Schaffung eines Baukastens, der aus mehreren Modulen besteht, die in die Aufnahmevorrichtung passen und sich hinsichtlich der Abmessungen des Pulverraums voneinander unterscheiden. Es hat sich nämlich gezeigt, dass sich eine gleichmäßige Temperierung des in Herstellung befindlichen Bauteils auch verbessern lässt, wenn das Pulverbett in Bezug auf die Abmessungen des herzustellenden Bauteils möglichst klein gewählt wird. Mit anderen Worten werden durch diese Maßnahme die Wege, die die Wärme von der Seitenbegrenzung bzw. der Bodenplatte bis zu dem in Herstellung befindlichen Bauteil im Pulverbett zurücklegen muss, minimiert. Da das Pulver im Vergleich zum Bauteil und der Seitenbegrenzung sowie der Bodenstruktur ein schlechter Wärmeleiter ist, kann hierdurch die Isolationswirkung des Pulvers vorteilhaft minimiert werden. Gleichzeitig lässt sich das Bauteil vorteilhaft mit einem geringen Einsatz an Pulver herstellen, was insbesondere bei teuren Werkstoffen von Vorteil ist.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben. Es zeigen
- Figur 1: Vorrichtung zur Aufnahme eines Pulverbettes nach dem Stand der Technik und
- Figur 2 und 3: Ausführungsbeispiele für erfindungsgemäße Vorrichtungen zur Aufnahme eines Pulverbettes, die geeignet sind, um in die Anlage gemäß Figur 1 eingesetzt zu werden, da sie als Modul ausgeführt sind, schematisch im Schnitt.

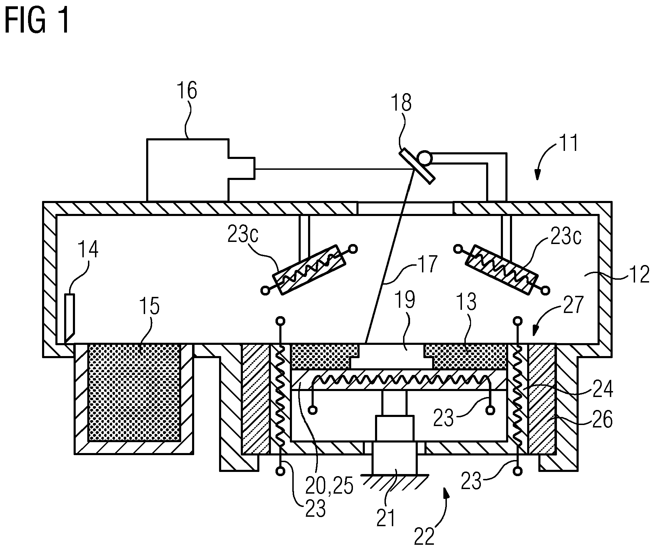

In Figur 1 ist eine Anlage 11 zum Laserschmelzen schematisch darstellt. Diese weist eine Prozesskammer 12 auf, in der ein Pulverbett 13 hergestellt werden kann. Zur Herstellung jeweils einer Lage des Pulverbettes 13 wird eine Verteilungseinrichtung in Form einer Rakel 14 über einen Pulvervorrat 15 und anschließend über das Pulverbett 13 bewegt, wodurch eine dünne Schicht an Pulver im Pulverbett 13 entsteht. Ein Laser 16 erzeugt dann einen Laserstrahl 17, der mittels einer optischen Umlenkvorrichtung mit Spiegel 18 über die Oberfläche des Pulverbettes 13 bewegt wird. Dabei wird das Pulver am Auftreffpunkt des Laserstrahls 17 aufgeschmolzen, wodurch ein Bauteil 19 entsteht.

Das Pulverbett 13 entsteht auf einer Bauplattform 20, welche über einen Aktor 21 in einem topfförmigen Gehäuse 22 schrittweise um jeweils eine Pulverlagendicke abgesenkt werden kann. In dem Gehäuse 22 sowie der Bauplattform 20 sind Heizeinrichtungen 23 in Form von elektrischen Widerstandsheizungen vorgesehen, welche das in Entstehung befindliche Bauteil 19 sowie die Partikel des Pulverbettes 13 vorwärmen können.

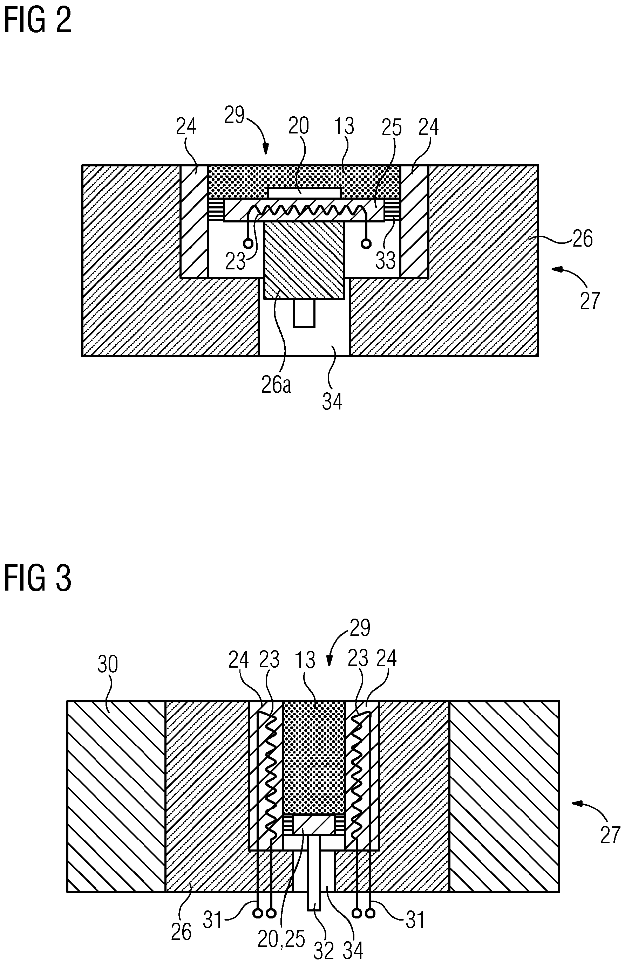

Das Gehäuse 22 bildet mit seinen Seitenwänden eine Seitenbegrenzung 24 aus, die das Pulverbett 13 zu den Seiten hin begrenzt. Nach unten ist das Pulverbett 13 durch die Bauplattform 20 begrenzt, die gleichzeitig eine Bodenstruktur 25 als untere Begrenzung für das Pulverbett 13 darstellt (vgl. auch Bodenstruktur 25 gemäß Figur 2). Außen an der Seitenbegrenzung 24 ist weiterhin eine Isolationsstruktur 26 vorgesehen, die die Seitenbegrenzung 24 mantelförmig umgibt und fest mit dieser verbunden ist. Das Gehäuse 22 mit der fest montierten Isolationsstruktur 26 bildet ein Modul 27, welches in einer Aufnahmevorrichtung der Prozesskammer eingesetzt werden kann.

Außerdem können auch außerhalb der Vorrichtung 27 zur Aufnahme des Pulverbettes externe Heizeinrichtungen 23e vorgesehen werden, damit ein Wärmeverlust über die Oberfläche des Bauteils 19 bzw. die Oberfläche des Pulverbettes 13 verringert wird. Hier erfolgt die Übertragung der Wärme vorteilhaft durch Wärmestrahlung, also berührungslos.

In den Figuren 2 und 3 ist dargestellt, dass die aus der Seitenbegrenzung 24 und Bodenstruktur 25 bestehende Vorrichtung 29 zur Aufnahme des Pulverbettes 13 auch Teil eines Moduls 27 sein kann, wobei die Isolationsstruktur 26 gemäß Figur 2 die Außenabmessungen des Moduls 27 bestimmt und somit gleichzeitig die Funktion eines Adapters übernimmt. Wie sich durch einen Vergleich von Figur 2 und Figur 3 erkennen lässt, weisen die Module 27 dieselben Außenabmessungen auf. Figur 3 lässt sich auch entnehmen, dass für den Fall, dass die Vorrichtung 29 zur Aufnahme des Pulverbettes 13 sehr kleine Abmessungen hat, ein zusätzliches Adapterbauteil 30 zum Einsatz kommen kann, wenn die Isolationsstruktur 26 bei Berücksichtigung der maximal erforderlichen Dicke das Volumen des Moduls nicht vollständig ausfüllt.

Der Figur 3 lässt sich außerdem entnehmen, dass das Modul 27 mit elektrischen Anschlüssen 31 für die Heizstrukturen 23 und mit einem mechanischen Anschluss 32 zur Anbindung eines nicht dargestellten Aktors für die vertikale Bewegung der Bodenstruktur 25 ausgestattet ist. Diese Anschlüsse sind in Figur 2 nicht näher dargestellt, selbstverständlich jedoch vorhanden. Die Anschlüsse sind so ausgestaltet, dass ein Auswechseln der Module unproblematisch erfolgen kann. Die Module ergeben somit ein Baukastensystem und können alle in derselben Anlage 11 verwendet werden.

In Figur 2 lässt sich außerdem erkennen, dass auf der Bodenstruktur 25 eine Bauplattform 20 als gesondertes Bauteil vorgesehen ist. Dieses ist vorzugsweise auch ein guter Wärmeleiter, also beispielsweise metallisch. Der Vorteil dieser Ausführungsform liegt darin, dass die Bauplattform ausgebaut werden kann, wenn die Oberfläche beispielsweise nach wiederholter Herstellung von Bauteilen nachbearbeitet werden muss.

Außerdem kann man in Figur 2 erkennen, dass die Heizeinrichtung 23 nur in der Bodenstruktur 25 vorgesehen ist. Die Bodenstruktur ist mit einer metallischen Bürstendichtung 33 zur Seitenbegrenzung 24 hin abgedichtet, so dass einerseits das Pulver des Pulverbettes 13 nicht an dem äußeren Rand der Bodenstruktur 25 vorbei herabrieseln kann und andererseits ein Wärmeübergang von der Bodenstruktur 25 in die Seitenbegrenzung 24 erfolgen kann.

Um die durch die Heizeinrichtung 23 erzeugte Wärme möglichst verlustfrei auf das Pulverbett 13 und die Seitenbegrenzung 24 übertragen zu können, ist die Bodenstruktur 25 mit einem Teil der Isolationsstruktur 26a fest verbunden. Dieses wird dadurch mit der Bodenstruktur 25 zusammen vertikal verschoben und verschließt eine Öffnung 34 in der Isolationsstruktur 26 unterhalb der Bodenstruktur 25 weitgehend, so dass ein Wärmeverlust durch diese Öffnung 34 weitgehend verhindert wird. Die Öffnung 34 ist zur mechanischen Anbindung der Bodenstruktur 25 an einen nicht dargestellten Aktor notwendig, damit die Bodenstruktur 25 vertikal bewegt werden kann.

In Figur 3 ist gezeigt, dass die Heizeinrichtung 23 nur in der Seitenbegrenzung 24 vorgesehen ist, während die Bodenstruktur 25 keine Heizeinrichtung aufweist. Vergleicht man das Volumen des Pulverbettes 13 gemäß Figur 3 mit demjenigen gemäß Figur 2, so zeigt sich, dass das herzustellende Bauteil (nicht dargestellt, beispielsweise eine Turbinenschaufel) im Verhältnis zur Grundfläche eine größere Höhe aufweisen kann, als in Figur 2. Deswegen ist der Wärmeverlust über die Bodenstruktur im Verhältnis nicht so groß, was eine Beheizung der Bodenstruktur 25 entbehrlich macht. Es kann sogar vorgesehen werden, dass die Bodenstruktur 25 thermisch von der Seitenbegrenzung 24 beispielsweise über eine schlecht wärmeleitfähige Keramikdichtung 35 (zumindest weitgehend) entkoppelt wird, so dass gezielt Wärme aus dem herzustellenden Bauteil auf die Bodenstruktur 25 (die gleichzeitig als Bauplatte 20 verwendet wird) übertragen werden kann. Der Betrag der abgeführten Wärme kann gezielt dazu benutzt werden, um eine gesteuerte Abkühlung des in Entstehung befindlichen Bauteils zu bewerkstelligen.

## Patentansprüche

1. Anlage für ein additives Herstellungsverfahren, aufweisend eine Prozesskammer (12), in der eine Vorrichtung (29) zur Aufnahme eines Pulverbettes (13) vorgesehen ist, wobei die Vorrichtung
• einen nach oben offenen Pulverraum mit einer Bodenstruktur (25) und einer Seitenbegrenzung (24) für das Pulverbett (13) aufweist,
• eine Heizeinrichtung (23) für den Pulverraum aufweist
• und eine thermische Isolationsstruktur (26) aufweist, die den Pulverraum an der Seitenbegrenzung (24) umgibt,
**dadurch gekennzeichnet,**
**dass** die Isolationsstruktur (26) wannenförmig ausgebildet ist, wobei
• die Vorrichtung (29) zur Aufnahme des Pulverbettes in eine wannenförmige Vertiefung der Isolationsstruktur eingesetzt ist,
• für einen Aktor zur Bewegung der Bodenstruktur in der Isolationsstruktur eine Ausnehmung oder Öffnung vorgesehen ist.

2. Anlage nach Anspruch 1,
**dadurch gekennzeichnet,**
**dass** die Isolationsstruktur (26) und die Vorrichtung zur Aufnahme des Pulverbettes (29) eine Temperaturbeständigkeit von mindestens 800 °C aufweisen.

3. Anlage nach einem der voranstehenden Ansprüche,
**dadurch gekennzeichnet,**
**dass** die Isolationsstruktur eine Wärmeleitfähigkeit von höchstens 0,5 W/mK aufweist.

4. Anlage nach Anspruch 3,
**dadurch gekennzeichnet,**
**dass** die Isolationsstruktur (26) aus einem porösen mineralischen Material, insbesondere geblähtem Perlit, besteht.

5. Anlage nach einem der voranstehenden Ansprüche,
**dadurch gekennzeichnet,**
**dass** die Seitenbegrenzung (24) und/oder die Bodenstruktur (25) eine Wärmeleitfähigkeit von mindestens 20 W/mK aufweist.

6. Anlage nach Anspruch 5,
**dadurch gekennzeichnet,**
**dass** die Seitenbegrenzung (24) und/oder die Bodenstruktur (25) aus einem Metall, insbesondere Kupfer, Molybdän oder Wolfram, und/oder aus einer Keramik, insbesondere Siliziumkarbid, Bornitrid oder Aluminiumnitrid, bestehen.

7. Anlage nach einem der voranstehenden Ansprüche,
**dadurch gekennzeichnet,**
**dass** die Seitenbegrenzung (24) und/oder die Bodenstruktur (25) eine Wandstärke von mindestens 10 mm aufweisen.

8. Anlage nach Anspruch 7,
**dadurch gekennzeichnet,**
**dass** die Heizeinrichtung in die Bodenstruktur (24) und/oder die Seitenbegrenzung (24) eingebettet ist.

9. Anlage nach einem der voranstehenden Ansprüche,
**dadurch gekennzeichnet,**
**dass** die Bodenstruktur (25) eine Bauplattform (20) für herzustellende Bauteile ausbildet.

10. Anlage nach einem der voranstehenden Ansprüche,
**dadurch gekennzeichnet,**
**dass** die Bodenstruktur (25) in der Seitenbegrenzung (24) vertikal verschiebbar ist.

11. Anlage nach Anspruch 9,
**dadurch gekennzeichnet,**
**dass** die Bodenstruktur (25) mit einer Bürstendichtung (33) an der Seitenbegrenzung (24) abgedichtet ist.

12. Anlage nach einem der voranstehenden Ansprüche,
**dadurch gekennzeichnet,**
**dass** die Isolationsstruktur (26) mit der Vorrichtung (29) zur Aufnahme des Pulverbettes (13) ein Modul (27) bildet, welches in der Prozesskammer (12) in einer Aufnahmevorrichtung (28) eingesetzt ist.

13. Anlage nach Anspruch 12,
**dadurch gekennzeichnet,**
**dass** mehrere Module (27) vorgesehen sind, die in die Aufnahmevorrichtung (28) passen und sich hinsichtlich der Abmessungen des Pulverraumes voneinander unterscheiden.

## Claims

1. Plant for an additive production method, having a process chamber (12), in which is provided a device (29) for accommodating a powder bed (13), where the device
• has a top-open powder chamber with a bottom structure (25) and a side boundary (24) for the powder bed (13),
• has a heating device (23) for the powder chamber
• and has a thermal insulation structure (26) which surrounds the powder chamber on the side boundary (24),
**characterized in that**
the insulation structure (26) is of trough-shaped design, wherein
• the device (29) for accommodating the powder bed is inserted into a trough-shaped recess of the insulation structure,
• for an actuator for moving the bottom structure, a recess or opening is provided in the insulation structure.

2. Plant according to Claim 1,
**characterized in that**
the insulation structure (26) and the device for accommodating the powder bed (29) have a temperature resistance of at least 800°C.

3. Plant according to one of the preceding claims,
**characterized in that**
the insulation structure has a thermal conductivity of at most 0.5 W/mK.

4. Plant according to Claim 3,
**characterized in that**
the insulation structure (26) consists of a porous mineral material, especially expanded perlite.

5. Plant according to one of the preceding claims,
**characterized in that**
the side boundary (24) and/or the bottom structure (25) has/have a thermal conductivity of at least 20 W/mK.

6. Plant according to Claim 5,
**characterized in that**
the side boundary (24) and/or the bottom structure (25) consists of a metal, especially copper, molybdenum or tungsten, and/or of a ceramic, especially silicon carbide, boron nitride or aluminum nitride.

7. Plant according to one of the preceding claims,
**characterized in that**
the side boundary (24) and/or the bottom structure (25) have a wall thickness of at least 10 mm.

8. Plant according to Claim 7,
**characterized in that**
the heating device is embedded into the bottom structure (25) and/or into the side boundary (24).

9. Plant according to one of the preceding claims,
**characterized in that**
the bottom structure (25 forms a build platform (20) for components to be produced.

10. Plant according to one of the preceding claims,
**characterized in that**
the bottom structure (25) is vertically displaceable in the side boundary (24).

11. Plant according to Claim 9,
**characterized in that**
the bottom structure (25) is sealed at the side boundary (24) by means of a brush seal (33).

12. Plant according to one of the preceding claims,
**characterized in that**
the insulation structure (26) together with the device (29) for accommodating the powder bed (13) form a module (27) which is inserted in a holding device (28) in the process chamber (12).

13. Plant according to Claim 12,
**characterized in that**
provision is made for a plurality of modules (27) which fit into the holding device (28) and differ from one another in respect to the dimensions of the powder chamber.

## Revendications

1. Installation pour un procédé de fabrication additif, comportant une chambre (12) de processus, dans laquelle est prévu un système (29) de réception d'un lit (13) de poudre, le système
• ayant un espace pour de la poudre, qui est ouvert vers le haut, qui a une structure (25) de fond et une démarcation (24) latérale pour le lit (13) de poudre,
• ayant un dispositif (23) de chauffage de l'espace pour de la poudre,
• ayant une structure (26) isolante du point de vue thermique, qui entoure l'espace pour de la poudre sur sa démarcation (24) latérale,
**caractérisée**
**en ce que** la structure (26) isolante est constituée en forme de cuvette, dans laquelle
• le système (29) de réception du lit de poudre est inséré dans une cavité en forme de cuvette de la structure isolante,
• un évidemment ou une ouverture est prévu dans la structure isolante pour un actionneur de déplacement de la structure de fond.

2. Installation suivant la revendication 1,
**caractérisée**
**en ce que** la structure (26) isolante et le système de réception du lit (29) de poudre ont une résistance à la température d'au moins 800°C.

3. Installation suivant l'une des revendications précédentes,
**caractérisée**
**en ce que** la structure isolante a une conductibilité de la chaleur d'au plus 0,5 W/mK.

4. Installation suivant la revendication 3,
**caractérisée**
**en ce que** la structure (26) isolante est en un matériau minéral poreux, notamment en perlite soufflée.

5. Installation suivant l'une des revendications précédentes,
**caractérisée**
**en ce que** la démarcation (24) latérale et/ou la structure (25) de fond a une conductibilité de la chaleur d'au moins 20 W/mK.

6. Installation suivant la revendication 5,
**caractérisée**
**en ce que** la démarcation (24) latérale et/ou la structure (25) de fond sont en un métal, notamment en cuivre, en molybdène ou en tungstène, et/ou en une céramique, notamment en carbure de silicium, en nitrure de bore ou en nitrure d'aluminium.

7. Installation suivant l'une des revendications précédentes,
**caractérisée**
**en ce que** la démarcation (24) latérale et/ou la structure (25) de fond ont une épaisseur de paroi d'au moins 10 mm.

8. Installation suivant la revendication 7,
**caractérisée**
**en ce que** le dispositif de chauffage est incorporé dans la structure (24) de fond et/ou dans la démarcation (24) latérale.

9. Installation suivant l'une des revendications précédentes,
**caractérisée**
**en ce que** la structure (25) de fond forme une plateforme (20) provisoire pour des pièces à fabriquer.

10. Installation suivant l'une des revendications précédentes,
**caractérisée**
**en ce que** la structure (25) de fond peut coulisser verticalement dans la démarcation (24) latérale.

11. Installation suivant la revendication 9,
**caractérisée**
**en ce que** la structure (25) de fond est rendue étanche sur la démarcation (24) latérale par une étanchéité (33) à brosse.

12. Installation suivant l'une des revendications précédentes,
**caractérisée**
**en ce que** la structure (26) isolante forme, avec le système (29) de réception du lit (13) de poudre, un module (27), qui, dans la chambre (12) de processus, est inséré dans un système (28) de réception.

13. Installation suivant la revendication 12,
**caractérisée**
**en ce qu'**il est prévu plusieurs modules (27), qui s'adaptent au système (28) de réception et se distinguent les uns des autres par les dimensions de l'espace pour de la poudre.
